# EUROPEAN PATENT SPECIFICATION

(11) **EP 0 674 683 B1**
(45) Date of publication and mention of the grant of the patent: **15.10.1997**
(21) Application number: 94904884.7
(22) Date of filing: 20.12.1993
(51) Int. Cl.: C08L 27/16, C08L 27/12, C08L 23/04

(54) **POLYMERIC BLENDS**
POLYMERMISCHUNGEN
MELANGES POLYMERES

(30) Priority: 21.12.1992 US 993998
(43) Date of publication of application: 04.10.1995
(73) Proprietor: RAYCHEM CORPORATION, Menlo Park, CA 94025-1164 (US)
(72) Inventor: TOY, Lester, T., Fremont, CA 94539 (US); LAU, Aldrich, N., K., Palo Alto, CA 94303 (US); LEONG, Chik-Weng, Palo Alto, CA 94303 (US)
(74) Representative: Jay, Anthony William
(86) International application number: US9312503
(87) International publication number: WO9414890

(56) References cited:
- EP-A- 0 432 911
- WO-A-88/07063
- PATENT ABSTRACTS OF JAPAN, unexamined applications, C field, vol. 13, no. 494, November 08, 1989 THE PATENT OFFICE JAPANESE GOVERNMENT page 112 C 651; & JP,A,01,197 551 (SEKISUI CHEM. CO. LTD.).
- PATENT ABSTRACTS OF JAPAN, unexamined applications, C field, vol. 13, no. 494, November 08, 1989 THE PATENT OFFICE JAPANESE GOVERNMENT page 112 C 651; & JP,A,01,197 551

## Description

### Technical Field of the Invention

This invention relates to blends made from vinylidene fluoride or polyethylene with a liquid crystalline polymer, dimensionally recoverable articles made from such blends, and methods for making such blends and articles.

### Background of the Invention

A dimensionally recoverable article is an article whose dimensional configuration may be made to change substantially when subjected to a treatment. Usually these articles recover towards an original shape from which they have previously been deformed, but the term "recoverable" as used herein also includes an article which adopts a new configuration, even if it has not been previously deformed.

A typical form of dimensionally recoverable article is a heat recoverable article, whose dimensional configuration may be changed by subjecting the article to heat treatment. In their most common form, heat recoverable articles comprise a shrinkable sleeve or tube made from a polymeric material, such as polyethylene or poly(vinylidene fluoride).

In the production of heat recoverable articles, the polymeric material may be cross-linked at any stage in the production of the article that will enhance the desired dimensional recoverability. One manner of producing a heat-recoverable article comprises shaping the polymeric material into the desired heat-stable form, subsequently cross-linking the polymeric material, heating the article to a temperature above the crystalline melting point or, for amorphous materials the softening point, as the case may be, of the polymer, deforming the article, and cooling the article whilst in the deformed state so that the deformed state of the article is retained. In use, since the deformed state of the article is heat unstable, application of heat will cause the article to assume or try to assume its original heat-stable shape.

Recoverable articles are frequently used to cover objects having a tubular or otherwise regular elongate configuration, to provide, for example, environmental sealing protection. Where no free end of the elongate object is available, it is common practice to use a so-called wrap-around article, that is an article, typically in the form of a sheet, that is installed by wrapping it around the object to be covered so that opposed longitudinal edges overlap. In order to hold the wrap-around article around the object a closure means is applied to secure together the opposed longitudinal edges.

In some applications it is desirable that a dimensionally recoverable article recover along one dimension but not another. For example, it is generally desired that a tubular or wrap-around article recover radially around the object to be protected, but exhibit little or no recovery (or shrinkage) along the longitudinal direction. This way it is easy to match the region of the object to the protected with the length of the tubular or wrap-around article. If there were substantial longitudinal recovery, one would have to estimate what the final length of the tubular or wrap-around article would be. Longitudinal strain is also undesirable because it increases susceptibility to stress cracking. However, there often is substantial longitudinal recovery - even where there has been no deformation in the longitudinal direction because of the relaxation of residual strains from the shaping process.

It has been taught in the prior art to form a blend of a fluoropolymer such as poly(vinylidene fluoride) with a liquid crystalline polymer (optionally with a compatibilizer present) to improve mechanical properties and reduce the coefficient of linear expansion. The prior art teaches the use of relatively high amounts of liquid crystalline polymer, with the caution that use of less than the prescribed amount leads to no reduction in the coefficient of linear expansion. However, at such high concentrations of liquid crystalline polymer, the elongation of the blends are low, making them unsuitable for use in dimensionally recoverable articles.

We have discovered blends of a vinylidene fluoride polymer and a liquid crystalline polymer which unexpectedly have very low longitudinal recovery while at the same time having high elongation and other superior mechanical properties making them suitable for use in dimensionally recoverable articles, such as tubular or wrap-around closures and caps.

### Summary of the Invention

This invention provides a radiation-crosslinkable composition comprising a blend of (a) between 85 and 96 parts by weight of a matrix polymer selected from the group consisting of crystalline vinylidene fluoride polymer and polyethylene, (b) between 2 and 4 parts by weight of a liquid crystalline polymer, (c) between 1 and 10 parts by weight of a radiation crosslinking promoter, and (d) between 0.05 and 1 part by weight of a thermal degradation inhibitor.

In another embodiment, there is provided a method of making a dimensionally recoverable article, comprising:
(i) providing a composition comprising a blend as defined above;
(ii) melt-forming the composition into a shaped article;
(iii) crosslinking the shaped article;
(iv) heating the shaped article to an elevated temperature above the melting temperature of the matrix polymer but below the melting temperature of the liquid crystalline polymer;
(v) deforming shaped article into a deformed state while at the elevated temperature; and
(vi) cooling the shaped article while applying a constraint to hold the shaped article in its deformed state, until a lower temperature is reached at which the shaped article retains its deformed state upon removal of the constraint.

In yet another embodiment, there is provided a dimensionally recoverable article comprising a crosslinked blend of (a) between 85 and 96 parts by weight of a matrix polymer selected from the group consisting of crystalline vinylidene fluoride polymer and polyethylene, (b) between 2 and 4 parts by weight of a liquid crystalline polymer, (c) between 1 and 10 parts by weight of a radiation crosslinking promoter, and (d) between 0.05 and 1 part by weight of a thermal degradation inhibitor.

### Brief Description of the Drawing(s)

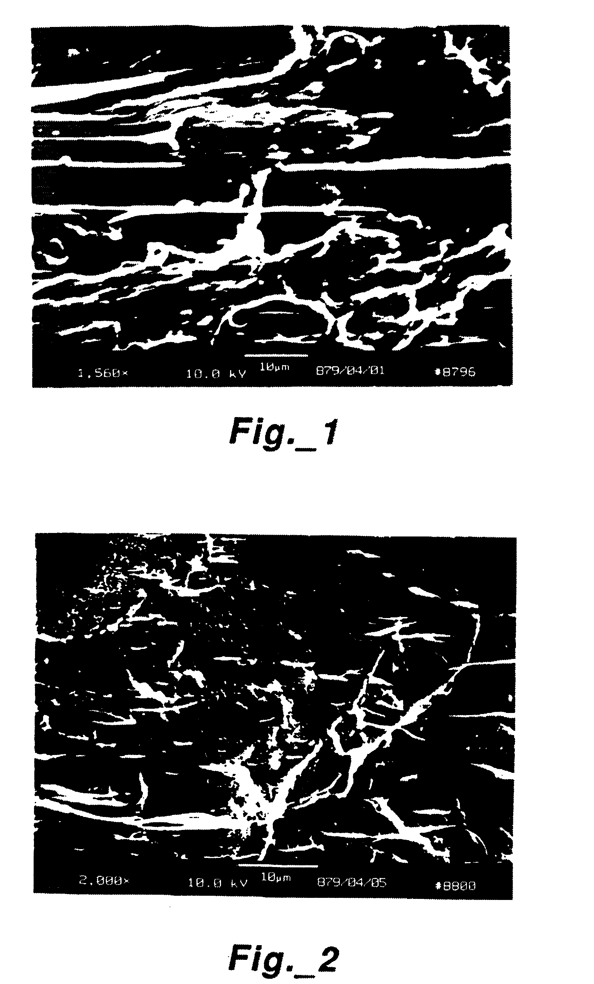

Figures 1 and 2 are electron micrographs showing the morphology of blends of the invention.

### Description of the Preferred Embodiments

The matrix polymer may be either crystalline vinylidene fluoride polymer or polyethylene.

The crystalline vinylidene fluoride polymer may be vinylidene fluoride homopolymer, also known as poly(vinylidene fluoride) or PVDF. Alternatively, it may be a copolymer of vinylidene fluoride and at least one comonomer such as ethylene, hexafluoropropylene, pentafluoropropylene, perfluoroethoxyethylene, or tetrafluoroethylene. Preferably, the crystalline vinylidene fluoride polymer is predominantly homopolymeric, by which is meant that at least 80 mole percent of the repeat units are derived from vinylidene fluoride. Predominantly homopolymeric crystalline vinylidene fluoride polymer is available commercially under the tradename Kynar^{TM} from Atochem.

The polyethylene is preferably a high density polyethylene having a viscosity of between 3,600 Pascal at 1000 rad/sec and and 16,000 Pascal at 100 rad/sec, when tested at 190 °C and 10 % strain using a Dynamic Mechanical Analyzer from Rheometrics. Exemplary suitable high density polyethylenes include Petrothene LB832 ( from Quantum), Chevron 9606 and 9632 (both from Chevron), and Marlax 6003 (from Philips).

The liquid crystalline polymer ("LCP") is a polymer which exhibits anisotropy in the molten form. The anisotropy can be detected optically, with a polarizing microscope. The LCP may be a polyester, a polyesteramide, a polyazomethine, a polyazine and a polyesterimide. Generally, the LCP will have substantial aromatic content, including being all-aromatic, but may also be an aromatic-aliphatic polymer. Examples of LCP polyesters include copolymers of p-hydroxybenzoic acid ("HBA") and poly(ethylene terephthalate) ("PET"); copolymers of HBA and 6-hydroxy-2-naphthoic acid ("HNA"); poly(decamethylene 4,4'-terephthaloyl dioxy dibenzoate); copolymers of HBA, HNA, terephthalic acid ("TA"), and hydroquinone; and copolymers of HBA, TA, and 2,6-dihydroxynaphthalene. An example of an LCP polyesteramide is the copolymer of HBA, TA, and aminophenol. An example of an LCP polyazomethine is poly(nitrilo-2-methyl-1,4-phenylenenitroethylidene-1,4-phenyleneethylidene). An example of an LCP polyazine is the polyalkanoate of 4,4'-dihydroxy-α,α'-dimethylbenzalazine. Examples of LCP polyesterimides include copolymers of 2,6-naphthalenedicarboxylic acid, TA, and 4-(4'-hydroxyphthalimido)phenol and copolymers of diphenol and 4-(4'-hydroxyphthalimido)benzoic acid.

The LCP is preferably a copolyester. A specific preferred LCP is Vectra A950^{TM} (from Celanese), which is a copolymer of HBA and HNA. Another LCP is Xydar^{TM} (from Amoco).

The LCP should be present in an amount of between 2 and 4 parts by weight, preferably between 3 and 4 parts by weight, per 100 parts by weight of the matrix polymer.

Preferred crosslinking promoters (c) contain at least two ethylenic double bonds, which may be present, for example, in allyl, methallyl, propargyl, acrylyl, or vinyl groups. Examples of suitable crosslinking promoters include triallyl cyanurate (TAC), triallyl isocyanurate (TAIC), triallyl trimellitate, triallyl trimesate, tetraallyl pyromellitate, the diallyl ester of 1,1,3-trimethyl-5-carboxy-3-(p-carboxyphenyl)indane, diallyl adipate, diallyl phthalate (DAP), diallyl isophthalate, diallyl terephthalate, 1,4-butylene glycol dimethacrylate, trimethylolpropane trimethacrylate (TMPTM), pentaerythritol trimethacrylate, glycerol propoxy trimethacrylate, liquid poly(1,2-butadiene), tri-(2-acryloxyethyl)isocyanurate, and tri-(2-methacryloxyethyl)isocyanurate. Preferred crosslinking agents are TAC, TAIC, TMPTM, and DAP. Other crosslinking agents which can be used are those disclosed in U.S. Pat. 3,763,222; 3,840,619; 3,894,118; 3,911,192; 3,970,770; 3,985,716; 3,995,091; 4,031,167; 4,155,823; and 4,353,961. Mixtures of crosslinking agents can be used.

Suitable thermal degradation inhibitors include alkylated phenols, e.g. those commercially available as Goodrite 3125^{TM}, Irganox 1010^{TM} (pentaery-thrityl tetrakis-3-(3,5-di-tert-butyl-4-hydroxyphenyl)propionate, Irganox 1035^{TM}, Irganox 1076^{TM} (octadecyl 3-(3,5-di-tert-butyl-4-hydroxyphenyl)propionate), Irganox 3114^{TM} (1,3,5-tris-(3,5-di-tert-butyl-4-hydroxybenzyl)isocyanurate), Topanol CA^{TM} (1,1,3-tris-(5-tert-butyl-4-hydroxy-2-methylphenyl)butane), Irganox 1093^{TM}, and Vulkanox BKF^{TM}; organic phosphite or phosphates, e.g. dilauryl phosphite and Mark 1178^{TM}; alkylidene polyphenols, e.g. Ethanox 330^{TM} (1,3,5-tris-(3,5-di-*tert*-butyl-4-hydroxybenzyl)mesitylene); thio-bis alkylated phenols, e.g. Santonox R^{TM} (4,4'-thiobis-(3-methyl-6-tert-butylphenol); dilauryl thio-dipropionate, e.g. Carstab DLTDP^{TM}; dimyristyl thiodipropionate, e.g. Carstab DMTDP; distearyl thiodipropionate, e.g. Cyanox STDP; amines, e.g. Wingstay 29, and acid acceptors such as calcium carbonate, zinc oxide, antimony trioxide, and lead oxide. Combinations of thermal degradation inhibitors can be used. A preferred combination especially for blends for use at elevated temperatures is an acid acceptor plus an alkylated phenol or other antioxidant.

Additionally, other additives such as UV stabilizers such as [2,2'-thio-bis(4-t-octylphenolato)] n-butylamine nickel, Cyasorb UV 1084, 3,5-di-t-butyl-p-hydroxybenzoic acid, UV Chek AM-240; flame retardants such as decabromodiphenyl ether, perchloropentacyclodecane, 1,2-bis(tetrabromophthalimido)ethylene; and pigments such as titanium dioxide can be used as is conventionally known in the art.

Optionally, the blends of this invention can further include an elastomer, in amounts of between 1 and 100, preferably between 1 and 50, parts by weight per 100 parts by weight of the matrix polymer. Where the matrix polymer is a crystalline vinylidene fluoride polymer, a preferred elastomer is an elastomeric non-crystalline vinylidene fluoride copolymer, for example Viton^{TM} available from du Pont. Where the matrix polymer is polyethylene, a preferred elastomer is ethylene-propylene-diene polymer (EPDM), for example available as Nordel^{TM} from DuPont or as Vistalon^{TM} from Exxon.

The blends of this invention can be prepared by melt blending the components in a single or twin screw extruder, Banbury mixer, Brabender Plasticorder torque rheometer, Buss kneader, or other plastics processing equipment. The processing temperature is preferably close to or slightly above the melting temperature of the LCP. In those instances in which the melting temperature of the LCP has been depressed because of the blending, it is to be understood the melting temperature means the depressed melting temperature, and not the melting temperature of pure, unblended LCP.

Dimensionally recoverable articles can be made from the compositions of this invention by various methods well known in the art. The composition is melt-formed into a desired dimensionally-stable form, for example by injection molding or extrusion, at a temperature above the melting point of the LCP (adjusted for any depression, as discussed above). We have discovered that if during the melt-forming step the composition is subjected to a shear stress of at least 1,000 sec⁻¹, preferably at least 3000 sec⁻¹, the resulting article exhibits a desired low coefficient of linear expansion but yet retains the substantial elongation necessary for a dimensionally recoverable article (typically at least 100 per cent). By shear stress, we mean the mean velocity of the blend divided by the characteristic flow length.

The inclusion of an LCP into the composition, in addition to causing the improved properties in the final product, as discussed further below, also provides advantages in the melt-forming step. We have found that the presence of the LCP leads to a reduced melt viscosity and lower head pressure during melt processing.

Compositions of this invention can be crosslinked, preferably by irradiation after the deformation step. The dosage employed in the irradiation step is generally below about 50 MRads to ensure that the polymer is not degraded by excessive irradiation. The dosage preferably employed depends upon the extent of crosslinking desired, balanced against the tendency of a polymer to be degraded by high doses of irradiation. Suitable dosages generally are in the range of 2 to 40 Mrads, for example 2 to 30 Mrads, preferably 3 to 20 Mrads, especially 4 to 25 Mrads, particularly 4 to 15 Mrads. The ionizing radiation can for example be in the form of accelerated electrons from an electron beam or gamma rays from a radioactive source. Irradiation is generally carried out at about room temperature, but higher temperatures can also be used.

Deformation of the articles to their dimensionally recoverable shape can be accomplished by methods such as those disclosed in Cook et al., US 3,086,242 (1963) and Cook, US 3,397,372 (1971). The original dimensionally stable form may be a transient form in a continuous process in which, for example an extruded tube is expanded while hot (e.g. by application of an internal air pressure or an external vacuum) to a dimensionally unstable form but in other applications, a preformed dimensionally stable article is deformed to a dimensionally unstable form in a separate stage. For example, a tubular article may be heated in a bath of a hot fluid and deformed by insertion of a mandrel into the hot tubular article. After deformation, the deformed article is cooled to a lower temperature at which the deformed shape is stable. Recovery during the cooling step is prevented by applying a constraint such as air pressure or mechanical means; after cooling to the lower temperature, the constraint may be removed.

For dimensionally recoverable articles made from compositions of this invention, the deformation temperature is preferably above the melting temperature of the matrix polymer and below the melting temperature of the LCP (adjusted for any depression). Where the matrix polymer is crystalline vinylidene fluoride polymer, the deformation temperature is typically between 160° and 300°C.

As mentioned above, dimensionally recoverable articles made from compositions of this invention show unexpectedly small recoveries in the longitudinal direction, less than 0.5 %, while the corresponding radial recoveries are greater than 100. In addition, they also exhibit superior mechanical properties such as modulus.

We have found that the LCP is dispersed in the matrix polymer as microfibrils, creating a reinforcing effect. Further, the microfibrils tend to align longitudinally, because of the shear forces during melt processing. Referring now to Figure 1, it is an electron micrograph at 1560X magnification of a longitudinal section of a blend showing LCP fibers oriented in the longitudinal direction. The average diameter of the fibers is about 1.5 µm and the aspect ratio is on the order of 100:1 (L:D). Figure 2 is a electron micrograph at 2000X magnification showing a cross-section (at a slight angle) of a blend, with LCP microfibrils protruding from a matrix of crystalline vinylidene fluoride polymer. In each figure, the white bar at the bottom represents a 10 µm length, for reference purposes.

Our invention can be further understood by reference to the following examples, which are provided by means of illustration and not of limitation.

### Example 1

The following is a generally applicable method for making the blends of this invention, illustrated by reference to specific preferred materials. Initially, a masterbatch of vinylidene fluoride polymer (Kynar 450, a substantially homopolymeric crystalline vinylidene fluoride polymer available commercially from Atochem) was melt prepared in a batch mixer such as a Banbury^{TM} mixer at a temperature of 199 °C (390 °F). The composition of the masterbatch is given in Table I:

**Table I**

| Vinylidene Fluoride Masterbatch | |
|---|---|
| Component | Parts by Weight |
| Kynar 450 | 91.3 |
| Irganox 1010 | 0.10 |
| Diallyl phthalate | 2.30 |
| Triallyl cyanurate | 2.30 |

The masterbatch was then pelletized with a plasticating extruder at a screw speed of 15 rpm and a melt temperature of 199 °C (390 °F). The masterbatch was next blended with LCP (Vectra 950) according to the proportions shown in Table II, in a co-rotating twin-screw extruder at a screw speed of 150 rpm, a die pressure of 500 psi, and a melt temperature of 304 °C (580 °F).

**Table II**

| Vinylidene Fluoride - LCP Blend | |
|---|---|
| Component | Parts by Weight |
| Masterbatch (from Table I) | 96.0 |
| Vectra A950 | 4.0 |

The blend was extruded as a tubular profile using a single screw extruder at a melt temperature of 285 °C (545 °F). The tubular profile had an inner diameter of 2.24 mm (0.088 in) and wall thickness of 0.29 mm (0.0115 inch). The profile was extruded at a speed of 76.2 m/min (250 feet/min). The shear rate of the melt at the die was 3200 s⁻¹. The draw ratio was 1.36.

The tubular profile was then crosslinked by irradiation in an electron beam at a dose level of 6 Mrads. The tubing was then expanded to three times its original diameter (400 % expansion) using a vacuum expander at a temperature of 179 °C (355 °F).

### Example 2

The blend of Example 1 was let-down using a single-screw extruder with a standard pineapple mixing screw. The blend of Table II was mixed with an equal weight of the masterbatch of Table I, to produce a final blend having half the amount of LCP compared to Example 1. This blend was then extruded and expanded as described in Example 1. The results are provided in Table III.

**Table III**

| Shrinkage Test Results | | | | | |
|---|---|---|---|---|---|
| Ex. | LCT wt % | % Longitudinal Shrinkage (uncrosslinked) | % Longitudinal Shrinkage (crosslinked) | % Elongation (uncrosslinked) | % Radial Expansion (crosslinked) |
| -^{a} | 0 | 40 | 7 | 490 | 400 |
| 2 | 2 | 24 | 5 | 440 | 400 |
| 1 | 4 | 0 | 0 | 400 | 400 |

| | | | | | |
|---|---|---|---|---|---|
| ^{a} Control | | | | | |

## Claims

1. A radiation-crosslinkable composition comprising a blend of (a) between 85 and 96 parts by weight of a matrix polymer selected from the group consisting of crystalline vinylidene fluoride polymer and polyethylene, (b) between 2 and 4 parts by weight, preferably between 3 and 4 parts by weight, of a liquid crystalline polymer, (c) between 1 and 10 parts by weight of a radiation crosslinking promoter, and (d) between 0.05 and 1 part by weight of a thermal degradation inhibitor.

2. A radiation-crosslinkable composition according to claim 1, wherein the matrix polymer is a crystalline vinylidene fluoride polymer.

3. A radiation-crosslinkable composition according to claim 1, further comprising between 1 and 50 parts by weight of an elastomer, per 100 parts by weight of matrix polymer.

4. A method of making a dimensionally recoverable article, comprising:
(i) providing a composition comprising a blend of (a) between 85 and 96 parts by weight of a matrix polymer selected from the group consisting of crystalline vinylidene fluoride polymer and polyethylene, (b) between 2 and 4 parts by weight of a liquid crystalline polymer, (c) between 1 and 10 parts by weight of a radiation crosslinking promoter, and (d) between 0.05 and 1 part by weight of a thermal degradation inhibitor;
(ii) melt-forming the composition into a shaped article;
(iii) crosslinking the shaped article;
(iv) heating the shaped article to a first elevated temperature above the melting temperature of the matrix polymer but below the melting temperature of the liquid crystalline polymer;
(v) deforming shaped article into a deformed state while at the elevated temperature; and
(vi) cooling the shaped article while applying a constraint to hold the shaped article in its deformed state, until a lower temperature is reached at which the shaped article retains its deformed state upon removal of the constraint.

5. A method according to claim 4, wherein, in the composition, the matrix polymer is a crystalline vinylidene fluoride polymer.

6. A method according to claim 4, wherein the composition further comprises between 1 and 50 parts by weight of an elastomer, per 100 parts by weight of matrix polymer.

7. A method according to claim 4, wherein the melt-forming is effected at a shear rate of at least 1000 sec⁻¹.

8. A method according to claim 4, wherein a tubular shaped dimensionally recoverable article is formed.

9. A method according to claim 10, wherein the tubular shaped dimensionally recoverable article is deformed in a radial direction by at least 100 % in the deforming step.

10. A dimensionally recoverable article comprising a crosslinked blend of (a) between 85 and 96 parts by weight of a matrix polymer selected from the group consisting of crystalline vinylidene fluoride polymer and polyethylene, (b) between 2 and 4 parts by weight of a liquid crystalline polymer, (c) between 1 and 10 parts by weight of a radiation crosslinking promoter, and (d) between 0.05 and 1 part by weight of a thermal degradation inhibitor.

11. A dimensionally recoverable article according to claim 10, wherein the matrix polymer is a crystalline vinylidene fluoride polymer.

12. A dimensionally recoverable article according to claim 10, having a tubular shape.

13. A dimensionally recoverable article according to claim 14, which, upon complete recovery, has a recovery in the longitudinal direction of less than 0.5 per cent and a recovery in the radial direction of greater than 100 per cent.

## Patentansprüche

1. Durch Bestrahlung vernetzbare Zusammensetzung,
die eine Mischung aus folgenden Komponenten aufweist:
(a) 85 bis 96 Gewichtsteile eines Matrixpolymers, das ausgewählt ist aus der Gruppe, die aus kristallinem Vinylidenfluorid-Polymer und Polyethylen besteht,
(b) 2 bis 4 Gewichtsteile, vorzugsweise 3 bis 4 Gewichtsteile, eines flüssigkristallinen Polymers,
(c) 1 bis 10 Gewichtsteile eines Bestrahlungs-Vernetzungsbeschleunigers, und
(d) 0,05 bis 1 Gewichtsteil eines Inhibitors gegen thermische Degradation.

2. Durch Bestrahlung vernetzbare Zusammensetzung nach Anspruch 1,
wobei das Matrixpolymer ein kristallines Vinylidenfluorid-Polymer ist.

3. Durch Bestrahlung vernetzbare Zusammensetzung nach Anspruch 1,
die außerdem 1 bis 50 Gewichtsteile eines Elastomers pro 100 Gewichtsteile Matrixpolymer aufweist.

4. Verfahren zur Herstellung eines dimensionsmäßig rückstellbaren Gegenstandes, das folgendes aufweist:
(i) Bereitstellung einer Zusammensetzung, die eine Mischung aus folgenden Komponenten aufweist:
(a) 85 bis 96 Gewichtsteile eines Matrixpolymers, das ausgewählt ist aus der Gruppe, die aus kristallinem Vinylidenfluorid-Polymer und Polyethylen besteht,
(b) 2 bis 4 Gewichtsteile eines flüssigkristallinen Polymers,
(c) 1 bis 10 Gewichtsteile eines Bestrahlungs-Vernetzungsbeschleunigers, und
(d) 0,05 bis 1 Gewichtsteil eines Inhibitors gegen thermische Degradation;
(ii) Ausformen der Zusammensetzung aus der Schmelze zu einem Formteil;
(iii) Vernetzen des Formteils;
(iv) Erwärmen des Formteils auf eine erste erhöhte Temperatur oberhalb der Schmelztemperatur des Matrixpolymers, aber unterhalb der Schmelztemperatur des flüssigkristallinen Polymers;
(v) Verformen des Formteils in einen verformten Zustand bei der erhöhten Temperatur; und
(vi) Abkühlen des Formteils unter Ausübung eines Zwangs, um das Formteil in seinem verformten Zustand zu halten, bis eine niedrigere Temperatur erreicht ist, bei der das Formteil seinen verformten Zustand bei Beseitigung des Zwangs beibehält.

5. Verfahren nach Anspruch 4,
wobei, in der Zusammensetzung, das Matrixpolymer ein kristallines Vinylidenfluorid-Polymer ist.

6. Verfahren nach Anspruch 4,
wobei die Zusammensetzung außerdem 1 bis 50 Gewichtsteile eines Elastomers pro 100 Gewichtsteile Matrixpolymer aufweist.

7. Verfahren nach Anspruch 4,
wobei die Ausformung aus der Schmelze mit einer Schergeschwindigkeit von wenigstens 1000 s⁻¹ ausgeführt wird.

8. Verfahren nach Anspruch 4,
wobei ein rohrförmig ausgebildeter, dimensionsmäßig rückstellbarer Gegenstand gebildet wird.

9. Verfahren nach Anspruch 10,
wobei der rohrförmig ausgebildete, dimensionsmäßig rückstellbare Gegenstand beim Verformungsschritt in einer radialen Richtung mit wenigstens 100% verformt wird.

10. Dimensionsmäßig rückstellbarer Gegenstand, der eine vernetzte Mischung aus folgenden Komponenten aufweist:
(a) 85 bis 96 Gewichtsteile eines Matrixpolymers, das ausgewählt ist aus der Gruppe, die aus kristallinem Vinylidenfluorid-Polymer und Polyethylen besteht,
(b) 2 bis 4 Gewichtsteile eines flüssigkristallinen Polymers,
(c) 1 bis 10 Gewichtsteile eines Bestrahlungs-Vernetzungsbeschleunigers, und
(d) 0,05 bis 1 Gewichtsteil eines Inhibitors gegen thermische Degradation.

11. Dimensionsmäßig rückstellbarer Gegenstand nach Anspruch 10,
wobei das Matrixpolymer ein kristallines Vinylidenfluorid-Polymer ist.

12. Dimensionsmäßig rückstellbarer Gegenstand nach Anspruch 10,
der eine rohrförmige Form aufweist.

13. Dimensionsmäßig rückstellbarer Gegenstand nach Anspruch 12,
der bei vollständiger Rückstellung eine Rückstellung in Längsrichtung von weniger als 0,5 Prozent und eine Rückstellung in Radialrichtung von mehr als 100 Prozent hat.

## Revendications

1. Composition réticulable par des radiations, comprenant un mélange de (a) entre 85 et 96 parties en poids d'un polymère matriciel choisi dans le groupe consistant en un polymère cristallin de fluorure de vinylidène et un polyéthylène, (b) entre 2 et 4 parties en poids, de préférence entre 3 et 4 parties en poids, d'un polymère à cristal liquide, (c) entre 1 et 10 parties en poids d'un activateur de réticulation par radiations et (d) entre 0,05 et 1 partie en poids d'un inhibiteur de dégradation thermique.

2. Composition réticulable par radiations suivant la revendication 1, dans laquelle le polymère matriciel est un polymère cristallin de fluorure de vinylidène.

3. Composition réticulable par radiations suivant la revendication 1, comprenant en outre entre 1 à 50 parties en poids d'un élastomère, pour 100 parties en poids de polymère matriciel.

4. Procédé de production d'un article susceptible de reprise dimensionnelle, qui comprend les étapes consistant :
(i) à prendre une composition comprenant un mélange de (a) entre 85 et 96 parties en poids d'un polymère matriciel choisi dans le groupe consistant en un polymère cristallin de fluorure de vinylidène et un polyéthylène, (b) entre 2 et 4 parties en poids d'un polymère à cristal liquide, (c) entre 1 et 10 parties en poids d'un activateur de réticulation par radiations et (d) entre 0,05 et 1 partie en poids d'un inhibiteur de dégradation thermique ;
(ii) à faire prendre à la composition à l'état fondu la forme d'un article façonné ;
(iii) à réticuler l'article façonné ;
(iv) à chauffer l'article façonné à une température élevée au-dessus de la température de fusion du polymère matri-ciel mais au-dessous de la température de fusion du polymère à cristal liquide ;
(v) à faire passer l'article façonné dans un état déformé pendant qu'il se trouve à la température élevée ; et
(vi) à refroidir l'article façonné tout en exerçant une contrainte pour le maintenir dans son état déformé, jusqu'à ce qu'ait été atteinte une température plus basse à laquelle l'article façonné conserve son état déformé lorsque la contrainte cesse d'agir.

5. Procédé suivant la revendication 4, dans lequel le polymère matriciel dans la composition est un polymère cristallin de fluorure de vinylidène.

6. Procédé suivant la revendication 4, dans lequel la composition comprend en outre entre 1 et 50 parties en poids d'un élastomère, pour 100 parties en poids de polymère matriciel.

7. Procédé suivant la revendication 4, dans lequel la mise en forme à l'état fondu est effectuée à une vitesse de cisaillement d'au moins 1000 s⁻¹.

8. Procédé suivant la revendication 4, dans lequel un article de forme tubulaire susceptible de reprise dimensionnelle est formé.

9. Procédé suivant la revendication 10, dans lequel l'article de forme tubulaire susceptible de reprise dimensionnelle est déformé d'au moins 100 % dans une direction radiale dans l'étape de déformation.

10. Article susceptible de reprise dimensionnelle, comprenant un mélange réticulé de (a) entre 85 et 96 parties en poids d'un polymère matriciel choisi dans le groupe consistant en un polymère cristallin de fluorure de vinylidène et un polyéthylène, (b) entre 2 et 4 parties en poids d'un polymère à cristal liquide, (c) entre 1 et 10 parties en poids d'un activateur de réticulation par radiations et (d) entre 0,05 et 1 partie en poids d'un inhibiteur de dégradation thermique.

11. Article susceptible de reprise dimensionnelle suivant la revendication 10, dans lequel le polymère matriciel est un polymère cristallin de fluorure de vinylidène.

12. Article susceptible de reprise dimensionnelle suivant la revendication 10, ayant une forme tubulaire.

13. Article susceptible de reprise dimensionnelle suivant la revendication 14, qui présente après reprise totale une reprise dans la direction longitudinale d'au moins 0,5 % et une reprise dans la direction radiale de plus de 100 %.
